# EUROPEAN PATENT APPLICATION

(11) **EP 3 579 568 A1**
(43) Date of publication of application: **11.12.2019**
(21) Application number: 18748120.5
(22) Date of filing: 18.01.2018
(51) Int. Cl.: H04N 21/2662, H04N 21/462, H04N 21/84, H04N 21/233, H04N 21/234, H04N 21/266, H04N 21/845

(54) **INFORMATION PROCESSING DEVICE AND METHOD**

(30) Priority: 31.01.2017 JP 2017015419
(71) Applicant: Sony Corporation, Tokyo 108-0075 (JP)
(72) Inventor: HAMADA, Toshiya, Tokyo 108-0075 (JP)
(74) Representative: D Young & Co LLP
(86) International application number: PCT/JP2018/001316
(87) International publication number: WO 2018/142947

(57) **Abstract**

The present disclosure relates to an information processing apparatus and method that make it possible to suppress subjective a decrease in quality when a bit rate is low. A video metadata generation unit, and an audio metadata generation unit generate stream selection support information, the stream selection support information being metadata indicating information regarding a parameter to be preferentially maintained, the parameter being determined in accordance with content of content data, and a communication unit transmits the generated metadata and pieces of content data of a plurality of bit rates. The present disclosure is applicable to, for example, a distribution system including a file generation apparatus, and a reproduction terminal.

## Description

### Technical Field

The present disclosure relates to an information processing apparatus and method, and particularly to an information processing apparatus and method that make it possible to suppress a subjective decrease in quality when a bit rate is low.

### Background Art

In the past, in order to distribute video or data of music by streaming via the Internet, MPEG-DASH (Moving Picture Experts Group phase - Dynamic Adaptive Streaming over HTTP) has been developed (see, for example, Non-Patent Literature 1).

In distribution by MPEG-DASH, a client selectively acquired pieces of content of different bit rates in accordance with the fluctuation of the transmission band, and thus reproduction is continued.

### Citation List

### Non-Patent Literature

Non-Patent Literature 1: MPEG-DASH(Dynamic Adaptive Streaming over HTTP)(URL:http://mpeg.chiariglione.org/standards/mpeg-dash/media-presentation-description-and-segment-formats/text-isoiec-23009-12012-dam-1)

### Disclosure of Invention

### Technical Problem

In the case where content of a low bit rate is prepared on a server side, a method such as reducing the frame rate (fs) and reducing the resolution is used for reducing the bit rate. However, depending on content of the content, if the resolution were simply reduced, there was a risk that viewing would be inhibited.

Meanwhile, preference for which parameter is changed to reduce the bit rate differs for each user. In the MPEG-DASH standard, there was already a parameter called "Quality Ranking", but the parameter was not suitable for use in adaptive switching because it did not reflect content of content.

The present disclosure has been made in view of the above-mentioned circumstances and it is an object thereof to make it possible to suppress a subjective decrease in quality when a bit rate is low.

### Solution to Problem

An information processing apparatus according to a first aspect of the present technology includes: a metadata generation unit that generates metadata indicating information regarding a parameter to be preferentially maintained, the parameter being determined in accordance with content of content data; and a transmission unit that transmits the metadata generated by the metadata generation unit and pieces of content data of a plurality of bit rates.

The parameter includes a parameter relating to video data.

The parameter includes a gamma curve or a color gamut.

The parameter includes a parameter relating to audio data.

The parameter includes a sampling frequency, the number of quantization bits, and the number of channels.

The metadata is one piece of metadata fixed for content data or changes depending on reproduction time.

The transmission unit is capable of transmitting metadata included in an MPD file or an MP4 file.

The pieces of content data of the plurality of bit rates include content data of a low bit rate available as a through point at a time of switching, and the metadata generation unit is capable of generating metadata indicating that content data is the content data of the

An information processing method according to the first aspect of the present technology includes: by an information processing apparatus, generating metadata indicating information regarding a parameter to be preferentially maintained, the parameter being determined in accordance with content of content data; and transmitting the generated metadata and pieces of content data of a plurality of bit rates.

An information processing apparatus according to a second aspect of the present technology includes: a parameter setting unit that sets a parameter to be preferred, the parameter being used when switching a bit rate of content data to be received; and a bit rate switching unit that determines, on the basis of the parameter set by the parameter setting unit, a bit rate of the switched content data from pieces of content data of a plurality of bit rates.

The parameter is a parameter relating to video data.

The parameter includes a resolution, a frame rate, a sample bit length, and a chroma sub-sampling.

The parameter includes a gamma curve or a color gamut.

The parameter includes a parameter relating to audio data.

The parameter includes a sampling frequency, the number of quantization bits, and the number of channels.

The information processing apparatus further include a metadata reception unit that receives metadata indicating information regarding a parameter to be preferentially maintained, the parameter being determined in accordance with content of content data, in which the bit rate switching unit is capable of determining, on the basis of the metadata received by the metadata reception unit and the parameter set by the parameter setting unit, a bit rate of the switched content data.

The metadata is one piece of metadata fixed for content data or changes depending on reproduction time.

The metadata is included in an MPD file or an MP4 file and transmitted.

An information processing method according to the second aspect of the present technology includes: by an information processing apparatus, setting a parameter to be preferred, the parameter being used when switching a bit rate of content data to be received; and determining, on the basis of the set parameter, a bit rate of content data to be switched from pieces of content data of a plurality of bit rates.

In the first aspect of the present technology, metadata indicating information regarding a parameter to be preferentially maintained is generated, the parameter being determined in accordance with content of content data; and the generated metadata and pieces of content data of a plurality of bit rates are transmitted.

In the second aspect of the present technology, a parameter to be preferred is set, the parameter being used when switching a bit rate of content data to be received; and on the basis of the set parameter, a bit rate of content data to be switched is determined from pieces of content data of a plurality of bit rates.

### Advantageous Effects of Invention

In accordance with the present disclosure, it is possible to process information. In particular, it is possible suppress a subjective decrease in quality when a bit rate is low.

### Brief Description of Drawings

[Fig. 1] Fig. 1 is a diagram describing an example of data transmission using MPEG-DASH.
[Fig. 2] Fig. 2 is a diagram showing a configuration example of MPD.
[Fig. 3] Fig. 3 is a diagram describing time division of content.
[Fig. 4] Fig. 4 is a diagram showing an example of a hierarchical structure in the layer of Period and the lower layers in MPD.
[Fig. 5] Fig. 5 is a diagram describing a configuration example of an MPD file on a time axis.
[Fig. 6] Fig. 6 is a diagram describing a method for bit reduction.
[Fig. 7] Fig. 7 is a diagram describing a standard method of MPEG-DASH.
[Fig. 8] Fig. 8 is a diagram describing a standard method of MPEG-DASH.
[Fig. 9] Fig. 9 is a diagram describing a standard method of MPEG-DASH.
[Fig. 10] Fig. 10 is a diagram describing a proposed method in a reproduction terminal.
[Fig. 11] Fig. 11 is a diagram describing a proposed method in a server.
[Fig. 12] Fig. 12 is a diagram describing a case where there is a plurality of representations of different coding methods.
[Fig. 13] Fig. 13 is a block diagram showing an example of a configuration of a distribution system to which the present technology is applied.
[Fig. 14] Fig. 14 is a block diagram showing a main configuration example of a file generation apparatus.
[Fig. 15] Fig. 15 is a flowchart describing distribution data generation processing of a file generation apparatus.
[Fig. 16] Fig. 16 is a flowchart describing MPD file generation processing.
[Fig. 17] Fig. 17 is a flowchart describing video metadata generation processing.
[Fig. 18] Fig. 18 is a flowchart describing audio metadata generation processing.
[Fig. 19] Fig. 19 is a diagram showing an example of metadata (stream selection support information) relating to video.
[Fig. 20] Fig. 20 is a diagram showing an example of metadata (stream selection support information) relating to audio.
[Fig. 21] Fig. 21 is a diagram describing the update frequency of metadata.
[Fig. 22] Fig. 22 is a block diagram showing a main configuration example of a reproduction terminal.
[Fig. 23] Fig. 23 is a flowchart describing processing of setting a stream selection preference of a reproduction terminal.
[Fig. 24] Fig. 24 is a flowchart describing reproduction processing of a reproduction terminal.
[Fig. 25] Fig. 25 is a flowchart describing content file acquisition processing.
[Fig. 26] Fig. 26 is a flowchart describing stream selection processing.
[Fig. 27] Fig. 27 is a diagram describing an example of an extended property.
[Fig. 28] Fig. 28 is a diagram describing an example of switching streams.
[Fig. 29] Fig. 29 is a block diagram showing a main configuration example of a file generation apparatus.
[Fig. 30] Fig. 30 is a flowchart describing the MPD file generation processing.
[Fig. 31] Fig. 31 is a flowchart describing transition/use setting processing.
[Fig. 32] Fig. 32 is a flowchart describing another example of the stream selection processing.
[Fig. 33] Fig. 33 is a block diagram showing a configuration example of hardware of a computer.

### Mode(s) for Carrying Out the Invention

Hereinafter, embodiments for carrying out the present disclosure (hereinafter, referred to as embodiments) will be described. Note that description will be made in the following order.
1. Bit Rate Switching
2. First Embodiment (distribution system)
3. Second Embodiment (computer)

### <1. Bit Rate Switching>

### <Distribution of Video or Audio>

In recent years, streaming distribution via the Internet is expected as a means for delivering video and music to consumers. However, transmission in the Internet as a transmission means is unstable as compared with that in broadcast and optical disks. First, the maximum rate of the transmission band greatly changes depending on the user's environment. Further, a constant transmission band is not always secured even for the same user, and the transmission band fluctuates over time. Further, such fluctuation of the transmission band also means that the response time to a request from a client is not constant.

As a standard for such transmission via the Internet, MPEG-DASH (Moving Picture Experts Group - Dynamic Adaptive Streaming over HTTP) has been developed. This is a pull type model in which a plurality of files of different data sizes are placed on a server side and a client selects the optimal file by referring to MPD (Media Presentation Description). By using http without using a special protocol, a general HTTP (HyperText Transfer Protocol) server can be used. Regarding the file format, not only a file in the MPEG-TS (Moving Picture Experts Group - Transport Stream) but also a file in the ISOBMFF (International Organization for Standardization Base Media File Format) format is used.

### <MPEG-DASH>

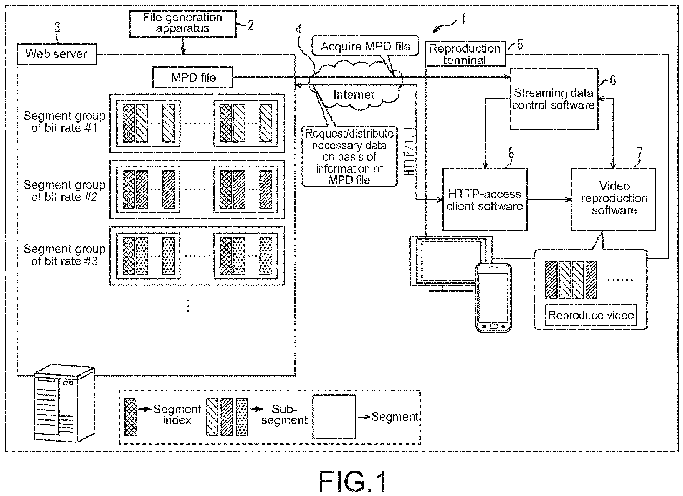

Fig. 1 shows an example of data transmission using MPEG-DASH. In an information processing system 1 in Fig. 1, a file generation apparatus 2 generates video data and audio data as video content, encodes the data, and converts the obtained data into a file in a transmission file format. For example, the file generation apparatus 2 converts the data into a file (segments the data) every approximately 10 seconds. The file generation apparatus 2 uploads the generated segment file to a Web server 3. Further, the file generation apparatus 2 generates an MPD file (management file) for managing video content, and uploads it to the Web server 3.

The Web server 3 as a DASH server distributes the file of video content generated by the file generation apparatus 2 to a reproduction terminal 5 via an Internet 4 by a method conforming to MPEG-DASH in real time. For example, the Web server 3 stores the segment file or MPD file uploaded from the file generation apparatus 2. Further, the Web server 3 transmits the stored segment file or MPD file to the reproduction terminal 5 in response to a request from the reproduction terminal 5.

The reproduction terminal 5 (reproduction apparatus) executes a streaming data control software (hereinafter, referred to also as control software) 6, a video reproduction software 7, an HTTP-access client software (hereinafter, referred to as access software) 8, and the like.

The control software 6 is software that controls data to be streamed from the Web server 3. For example, the control software 6 acquires an MPD file from the Web server 3. Further, the control software 6 instructs, on the basis of, for example, reproduction time information indicating the reproduction time or the like designated by the MPD file or the video reproduction software 7, and the network band of the Internet 4, the access software 8 to transmit a segment file to be reproduced.

The video reproduction software 7 is software that reproduces an encoded stream acquired from the Web server 3 via the Internet 4. For example, the video reproduction software 7 designates reproduction time information for the control software 6. Further, the video reproduction software 7 decodes, when acquiring a notification of reception start from the access software 8, the encoded stream supplied from the access software 8. The video reproduction software 7 outputs video data or audio data obtained as a result of the decoding.

The access software 8 is software that controls communication with the Web server 3 using HTTP. For example, the access software 8 supplies the notification of reception start to the video reproduction software 7. Further, the access software 8 transmits, to the Web server 3, a transmission request of the encoded stream of the segment file to be reproduced, in response to the instruction from the control software 6. Further, the access software 8 receives a segment file of a bit rate according to the communication environment and the like, which is transmitted from the Web server 3 in response to the transmission request. Then, the access software 8 extracts an encoded stream from the received file, and supplies the encoded stream to the video reproduction software 7.

### <MPD>

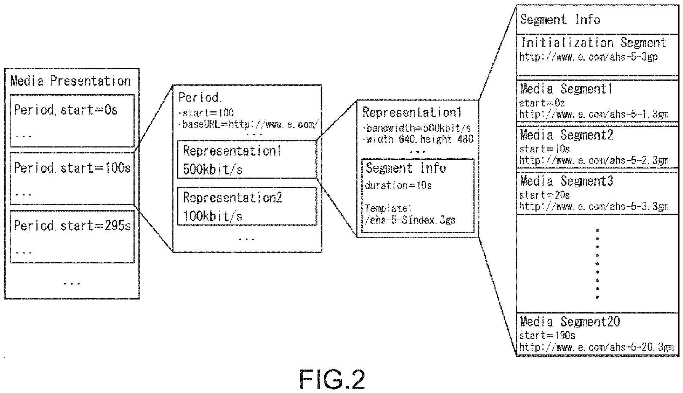

Next, MPD will be described. MPD has, for example, a configuration as shown in Fig. 2. In MPD analysis (parse), a client (in the case of the example shown in Fig. 1, the reproduction terminal 5) selects the optimal one from Representations contained in Period of MPD (Media Presentation in Fig. 2).

The client reads the top Segment of the selected Representation to acquire and process Initialization Segment. Subsequently, the client acquires and reproduces the subsequent Segment.

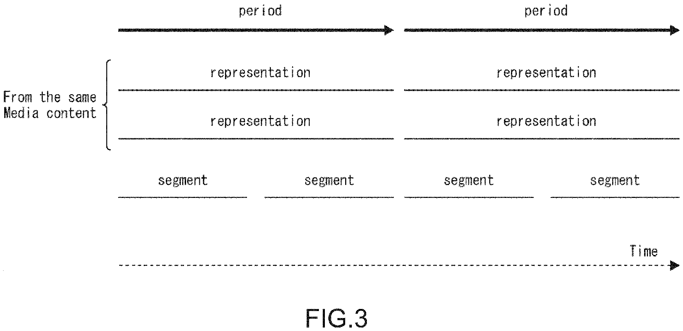

Note that the relationship between Period, Representation, and Segment in MPD is as shown in Fig. 3. That is, one piece of media content can be managed for each Period that is a data unit in the time direction. Each Period can be managed for each Segment that is a data unit in the time direction. Further, for each Period, a plurality of Representations of different attributes such as bit rates can be configured.

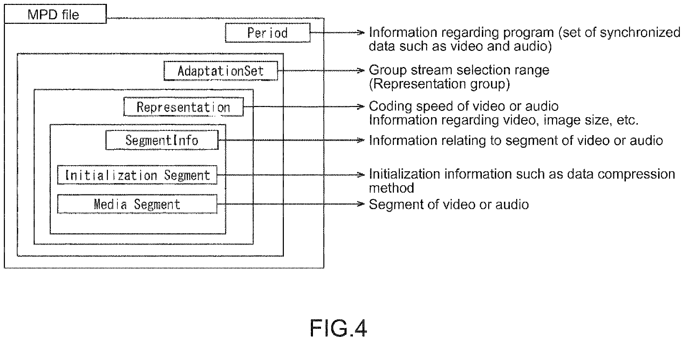

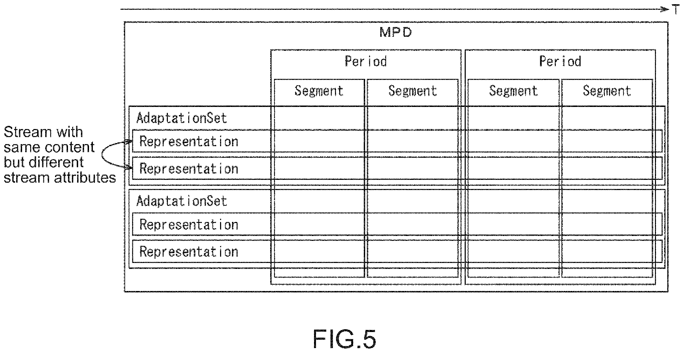

Therefore, this file of MPD (referred to also as MPD file) has a hierarchical structure as shown in Fig. 4 in the layer of Period and the lower layers. Further, the structure obtained by arranging this structure of MPD on a time axis is as shown in the example of Fig. 5. As is clear from the example of Fig. 5, there is a plurality of Representations for the same Segment. By adaptively selecting one of the plurality of Representations, the client is capable of acquiring and reproducing an appropriate stream data in accordance with the communication environment, its own decoding capability, and the like.

Note that in MPEG-DASH, it is possible to inform the client of quality of Representation by using a parameter called Quality ranking in MPD.

That is, as a parameter indicating quality of the stream, there is already an attribute "@qualityRanking" of Representation in ISO/IEC23009-1:2014. This represents the quality rank of Representation in one Adaptation Set. By utilizing this attribute, it is possible to inform the player of the switching priority in Adaptation Set. The player is capable of performing an operation such as selecting the highest quality (value of Quality ranking is small = upper) Representation taking into account other parameters such as a bit rate and language setting.

However, Quality ranking is a single ranking of Representation in AdaptationSet set by a sender side, and a DASH client cannot use Quality ranking as information for acquiring content/characteristics of content and selecting the optimal Representation on the basis of the user's preference. Further, Quality rankings cannot be compared with each other between different AdaptationSets.

### <Method for Bit Reduction>

In MPEG-DASH distribution, in order to allow the client to select a file of the optimal bit rate in accordance with fluctuation of the transmission band, it is necessary to prepare a plurality of files of different bit rates in the Web server 3. The simplest way to create files of various bit rates is to perform compression encoding with different bit rate settings.

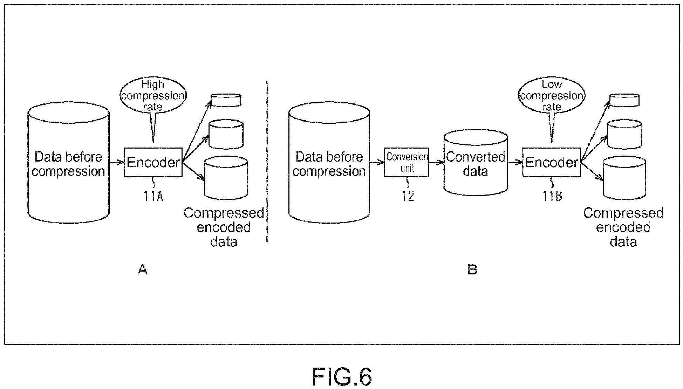

However, as shown in Part A of Fig. 6, if only the bit rate is reduced during encoding by an encoder 11A, noise due to compression encoding becomes noticeable as the bit rate is reduced. As a countermeasure, as shown in Part B of Fig. 6, a method of suppressing the apparent image quality deterioration by a conversion unit 12 that performs some conversion reducing the size of uncompressed data before encoding by an encoder 11B in advance to reduce the compression rate of encoding is effective.

By changing the following parameters, the amount of data input to the encoder 11B is reduced. For example, video has four types of parameters.
(1) Resolution: 3840×2160, 1920×1080, 1280×720, ...
(2) Frame rate: 119.88 Hz, 59.94 Hz, 50 Hz, 29.97 Hz, 25 Hz, 23.976 Hz, ...
(3) Gradation (bit length): 10 bit, 8 bit, ...
(4) Chroma sub-sampling:RGB4:4:4, YCbCr4:2:2, YCbCr4:2:0, ...

Regarding the resolution, it is possible to reduce the data amount by reducing the number of pixels per one frame. Regarding the frame rate, it is possible to reduce the data amount by reducing the image update frequency. Regarding the gradation, it is possible to reduce the data amount by reducing the data amount of each pixel (e.g., from 10 bit to 8 bit). Regarding the chroma sub-sampling, it is possible to reduce the data amount by switching RGB4:4:4 to YCbCr4:2:2 or YCbCr4:2:0.

Note that in the above description, the parameters are limited to parameters that can be expressed as numerical values and indexes (e.g., size of the attention point) that change depending on the subjective view are excluded. Among the main video parameters, those in which there is no change in data amount (e.g., color gamut or OETF/EOTF (SDR or HRD)) are excluded.

As an example, three types of parameters for audio are shown below.
(1) Sampling frequency: DSD fs=5.6 MHz, DSD 2.8 MHz, LPCM 44.1 kHz,..
(2) Number of quantization bits: Q=24 bits, 16 bits,..
(3) Number of channels: 22.2 ch, 7.1 ch, 5.1 ch, 2 ch, mono

Here, DSD is an abbreviation of Direct Stream Digital, and one of high-quality audio coding methods.

In the above description, regarding the sampling frequency, it is possible to reduce the data amount by reducing the number of generated samples per one second. Regarding the number of quantization bits, it is possible to reduce the data amount by reducing the data length of the channel per one sample. Regarding the number of channels, in the case of channel-based audio, it is possible to reduce the amount of data transmission by reducing the number of channels. In the case of object audio, the data amount increases as the number of objects to be handled increases. It is possible to reduce the amount of data transmission by selecting the objects reducing the number of objected to be transmitted.

As described above, when bit rate variations with suppressed deterioration are created, streams of different video parameters and audio parameters in addition to bit rate values are prepared on the Web server 3.

On the side of the reproduction terminal 5, which is the client, even if a stream is selected simply on the basis of only the bit rate value from the streams, the optimal stream is not necessarily selected. Further, even if information regarding Quality ranking is used, the Representation that matches the user's preference is not necessarily selected.

That is, in some cases, it is difficult to cope with it by a standard MPEG-DASH method in which a stream is selected on the basis of the bit rate value in accordance with the width of the transmission band.

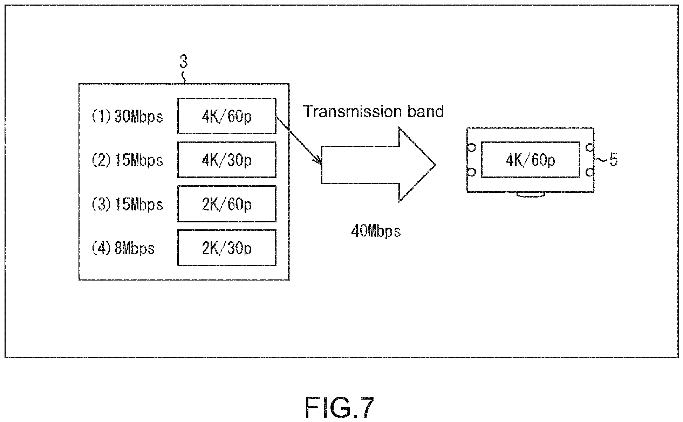

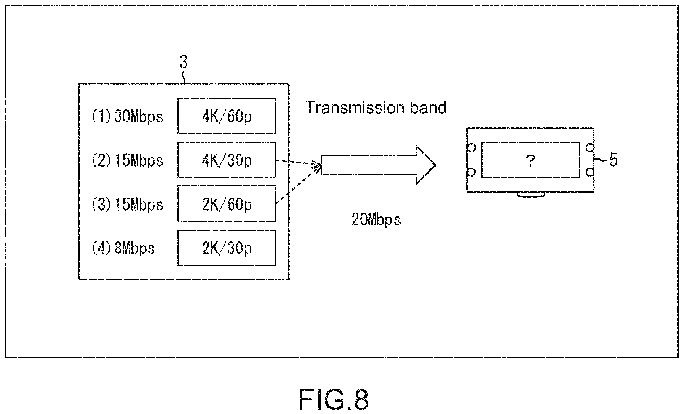

For example, as shown in Fig. 7, in the case where pieces of content are created with (1) 4K/60P at 30 Mbps, (2) 4K/30P at 15 Mbps, (3) 2K/60P at 15 Mbps, and (4) 2K/30P at 8 Mbps as pieces of content on the Web server 3, the content of (1) 4K/60P at 30 Mbps is selected when the transmission band is 40 Mbps, and transmitted to the reproduction terminal 5. However, in such a case, when the transmission band is 20 Mbps, which of the content of (2) 4K/30P at 15 Mbps and the content of (3) 2K/60P at 15 Mbps is to be selected is not known as shown in Fig. 8.

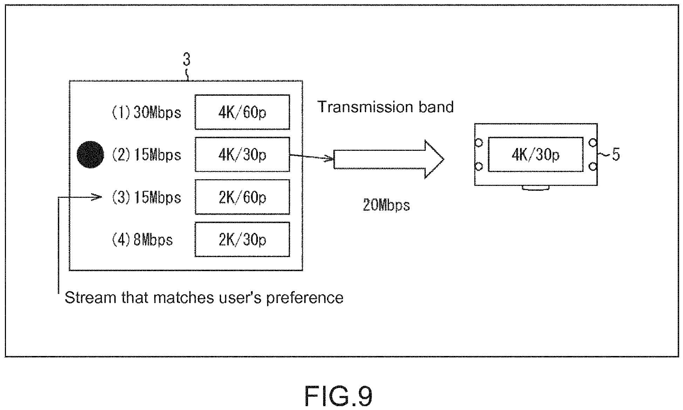

Further, in such a case, since the content of (2) 15Mbps is set higher than the content of (3) 2K/60P at 15 Mbps in the information regarding Quality ranking, the content of (2) 4K/30P at 15 Mbps is selected in accordance with Quality Ranking and transmitted to the reproduction terminal 5 as shown in Fig. 9 when the transmission band is 20 Mbps even if the user desires to view fast-moving sports with (3) 2K/60P at 15Mbps. Therefore, it is difficult to satisfy the desires of the user who desires to view fast-moving sports with (3) 2K/60P at 15 Mbps, even by using information regarding Quality ranking.

### <Bit Rate Switching of Present Technology>

Meanwhile, in the present technology, the preference of the parameter (parameter that maintains a value for high image quality as much as possible) to be preferred at the time of bit rate switching can be set in the reproduction terminal 5 of the client.

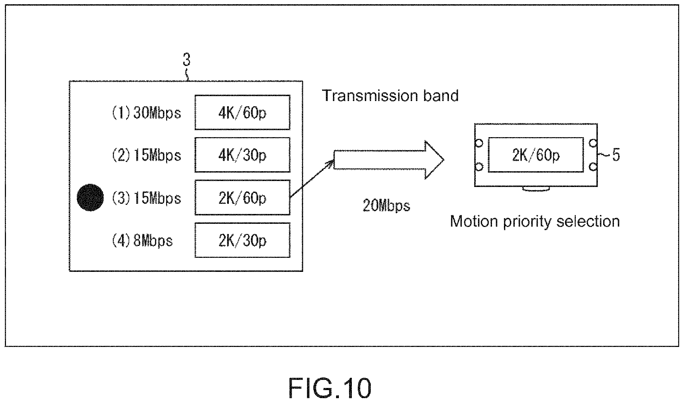

That is, as shown in Fig. 10, "motion priority selection" is set in which priority is given to the higher frame rate if the bit rate is substantially the same on the side of the reproduction terminal 5, pieces of content are created with (1) 4K/60P (which may be 120P or the like) at 30 Mbps, (2) 4K/30P at 15 Mbps, (3) 2K/60P at 15 Mbps, and (4) 2K/30P at 8 Mbps as pieces of content on the Web server 3. In such a case, when the transmission band is 20 Mbps, the content of (3) 2K/60P at 15 Mbps is selected and transmitted to the reproduction terminal 5.

As described above, by setting a parameter to be preferred at the time of stream selection on the side of the client (reproduction terminal 5), the stream desired by the user is preferentially selected.

However, there has been a risk that inappropriate selection is made in some cases because motion priority selection is performed regardless of content of the content.

In this regard, in the present technology, in addition to allowing the reproduction terminal 5 of the client to set the preference of a parameter to be preferred at the time of bit rate switching described above, the Web server 3 (on the content distribution side) analyzes content of the content and adds metadata (stream selection support information) indicating which parameter is to be preferred to the content

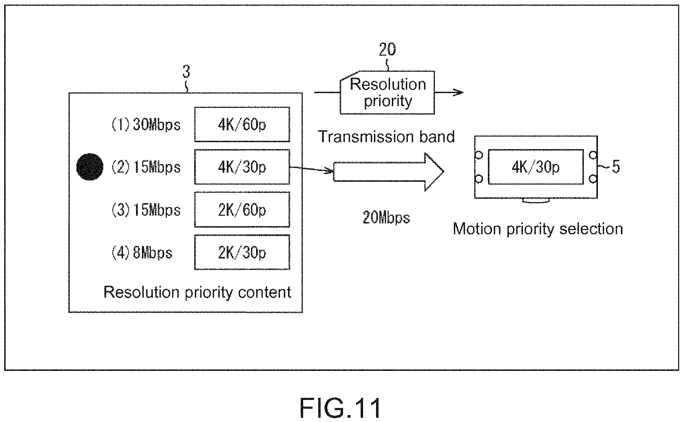

That is, as shown in Fig. 11, in the Web server 3, content of the content is analyzed as resolution priority content, and metadata 20 indicating resolution priority is added to the content and transmitted. Although the "motion priority selection" is set in the reproduction terminal 5, not the content of (3) 2K/60P at 15 Mbps but the content of (2) 4K/30P at 15 Mbps is selected because the content is resolution priority content.

Note that the Web server 3 on the distribution side only provide metadata serving as a reference for stream selection, and does not force the reproduction terminal 5 on the client side to make a selection. Which stream is selected is decided on the client side. Further, in the case where there is no metadata, a stream is selected in accordance with preference selection setting of the client.

The metadata is transmitted in an MPD file, an MP4 system layer, or another file. In the case where the metadata changes in time series, it may be stored as Timed Metadeta of MP4.

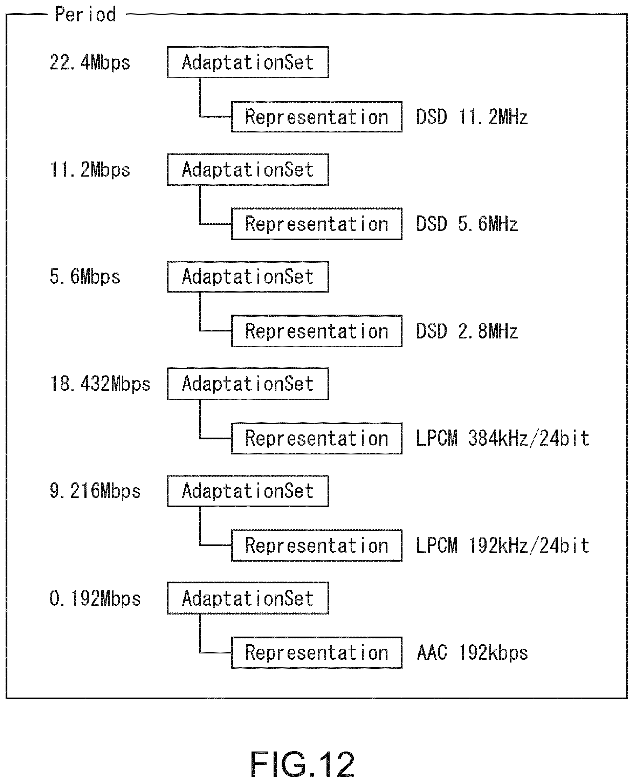

Fig. 12 is a diagram showing an example of variations prepared on the sender side in the case where there is a plurality of Representations of different coding methods.

In Fig. 12, an example of audio in which audio bit variations are prepared with DSD, LPCM, and AAC is shown.

Period in Fig. 12 includes AdaptationSet of 22.4 Mbps containing Representation of DSD 11.2 MHz, AdaptationSet of 11.2 Mbps containing Representation of DSD 5.6 MHz, AdaptationSet of 5.6 Mbps containing Representation of DSD 2.8 MHz, AdaptationSet of 18.432 Mbps containing Representation of LPCM 384 kHz/24bit, AdaptationSet of 9.216 Mbps containing Representation of LPCM 192 kHz/24bit, and AdaptationSet of 0.192 Mbps containing Representation of AAC 192 kbps.

Although DSD is mainly used, also LPCM is used for improving the reproduction compatibility in the environment where DSD cannot be reproduced. Further, in order to greatly reduce the bit rate, also AAC is used. In this case, if the bit rate is switched only by the bit rate value, DSD and LPCM are mixed and alternately selected. Switching between DSD and LPCM generally requires mode switching of a DA converter, and they cannot be connected seamlessly in some cases.

If designation such as DSD priority and LPCM priority can be made in the setting in the reproduction terminal 5, the deterioration in usability due to DSD/LPCM switching can be suppressed.

Further, if it can be seen from the metadata that this content focuses on DSD, the reproduction terminal 5 is also capable of preferentially selecting DSD.

As described above, in the present technology, a parameter for which quality should be focused on at the time of bit rate switching is set on the client side (in the reproduction terminal 5). Further, on the sender side (in the Web server 3), content of content are analyzed and an important parameter to be preferred at the time of bit rate switching is generated as metadata. Corresponding to this, on the client side, it is possible to select more suitable Representation on the basis of its own parameter setting and information regarding the metadata acquired from the Web server 3.

### <2. First Embodiment (distribution system)>

### <Distribution System>

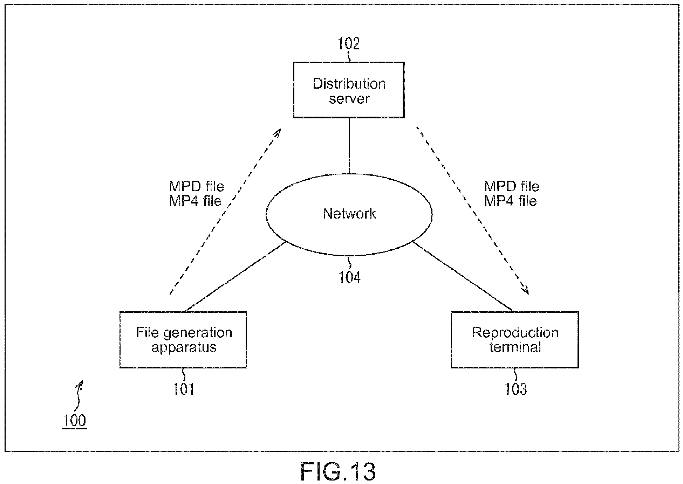

Next, a system to which the present technology as described above is applied will be described. Fig. 13 is a block diagram showing an example of a configuration of a distribution system as an aspect of an information processing system to which the present technology is applied. A distribution system 100 shown in Fig. 13 is a system that distributes data (content) such as an image and audio. In the distribution system 100, a file generation apparatus 101, a distribution server 102, and a reproduction terminal 103 are communicably connected to each other via a network 104.

The file generation apparatus 101 is an aspect of an information processing apparatus to which the present technology is applied, and is an apparatus that performs processing relating to generation of an MP4 file that stores image data and audio data or a file of MPD (referred to also as MPD file). For example, the file generation apparatus 101 generates image data and audio data, generates an MP4 file that stores the generated image data and generated audio data and an MPD file that manages the MP4 file, and supplies the generated files to the distribution server 102.

The distribution server 102 is an aspect of an information processing apparatus to which the present technology is applied, and is a server that performs processing relating to a content data distribution service (i.e., MP4 file distribution service using an MPD file) using MPEG-DASH. For example, the distribution server 102 acquires and manages the MPD file or MP4 file supplied from the file generation apparatus 101, and provides a distribution service using MPEG-DASH. For example, the distribution server 102 provides an MPD file to the reproduction terminal 103 in response to a request from the reproduction terminal 103. Further, the distribution server 102 supplies, in response to a request from the reproduction terminal 103 based on the MPD file, the requested MP4 file to the reproduction terminal 103.

The reproduction terminal 103 is an aspect of an information processing apparatus to which the present technology is applied, and is an apparatus that performs processing relating to reproduction of image data and audio data. For example, the reproduction terminal 103 requests the distribution server 102 to distribute an MP4 file in accordance with MPEG-DASH, and acquires the MP4 file supplied in response to the request. More specifically, the reproduction terminal 103 acquires the MPD file from the distribution server 102, and acquires, , in accordance with the information of the MPD file, the MP4 file storing desired content data from the distribution server 102. The reproduction terminal 103 decodes the acquired MP4 file, and reproduces the image data and audio data.

The network 104 is an arbitrary communication network, may be a communication network of wired communication or a communication network of wireless communication, or may include both of them. Further, the network 104 may include one communication network, or a plurality of communication networks. For example, the network 104 may include a communication network or communication path of an arbitrary communication standard such as a wide-area communication network for wireless mobiles such as the Internet, the public telephone network, and a so-called 3G network or 4G network, a wireless communication network that performs communication conforming to the WAN (Wide Area Network), LAN(Local Area Network), or Bluetooth (registered trademark) standard, a communication path for short-range wireless communication such as NFC (Near Field Communication), a communication path for infrared communication, and a communication network for wired communication conforming to the HDMI (registered trademark) (High-Definition Multimedia Interface) or USB(Universal Serial Bus) standard.

The file generation apparatus 101, the distribution server 102, and the reproduction terminal 103 are each communicably connected to the network 104, and are each capable of transmitting/receiving information to/from each other via this network 104. The file generation apparatus 101, the distribution server 102, and the reproduction terminal 103 may each be connected to the network 104 through wired communication or wireless communication, or may be connected through both of them.

Note that in Fig. 13, although one file generation apparatus 101, one distribution server 102, and one reproduction terminal 103 are shown as the configuration of the distribution system 100, the numbers of these are arbitrary and do not necessarily need to be the same. For example, in the distribution system 100, the number of file generation apparatuses 101, the number of distribution servers 102, and the number of reproduction terminals 103 may each be one or more.

### <File Generation Apparatus>

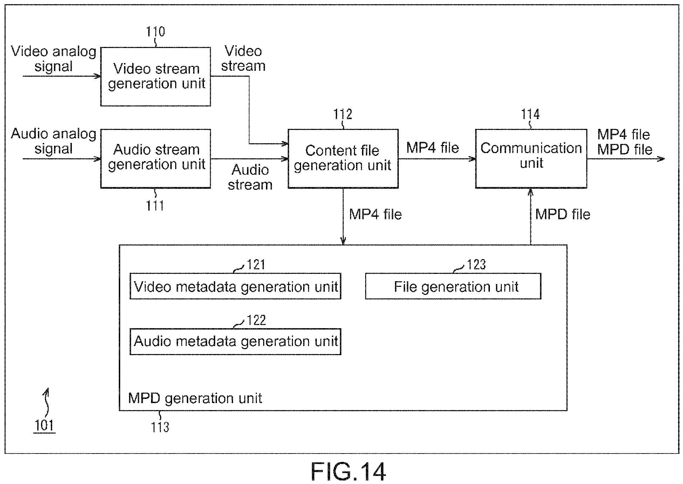

Fig. 14 is a block diagram showing a main configuration example of the file generation apparatus 101. As shown in Fig. 14, the file generation apparatus 101 includes a video stream generation unit 110, an audio stream generation unit 111, a content file generation unit 112, an MPD generation unit 113, and a communication unit 114.

The video stream generation unit 110 and the audio stream generation unit 111 each perform processing relating to generation of a stream of content data. For example, the video stream generation unit 110 generates a video stream that is a stream of video digital data (referred to also as image data) by performing A/D conversion on, performing frame rate conversion on, and encoding the input video analog signal (referred to also as image signal), and supplies it to the content file generation unit 112. For example, the audio stream generation unit 111 generates an audio stream that is a stream of audio digital data (referred to also as audio data) by modulating, performing A/D conversion on, and encoding the input audio analog signal (referred to also as audio signal), and supplies it to the content file generation unit 112.

Note that content of this signal processing on the video analog signal by the video stream generation unit 110 are arbitrary. Content of this signal processing on the audio analog signal by the audio stream generation unit 111 are arbitrary. For example, in the case of employing modulation or coding, the modulation method or coding method is arbitrary. For example, the video stream generation unit 110 is capable of generating, from the video analog signal, an MPEG2 stream, an AVC stream, a HEVC stream, and the like. For example, the audio stream generation unit 111 is capable of generating, from the audio analog signal, a DSD lossless stream, an AAC stream, an LPCM stream, and the like.

The content file generation unit 112 performs processing relating to generation of a file (content file) storing content data supplied from the video stream generation unit 110 and the audio stream generation unit 111. For example, the content file generation unit 112 generates an MP4 file that is a content file storing a video stream to be supplied as content data from the video stream generation unit 110 and an audio stream to be supplied as content data from the audio stream generation unit 111, and supplies it to the MPD generation unit 113 or the communication unit 114.

Note that the specification of this content file generated by the content file generation unit 112 is arbitrary. For example, the content file generation unit 112 is capable of generating an MP4 file storing an MPEG2 stream, an AVC stream, a HEVC stream, a DSD lossless stream, an AAC stream, an LPCM stream, or the like. It goes without saying that the content file generation unit 112 may generate a content file other than the MP4 file.

The MPD generation unit 113 performs processing relating to generation of information regarding management of the content file generated by the content file generation unit 112. For example, the MPD generation unit 113 generates an MPD file regarding the MP4 file supplied from the content file generation unit 112, and supplies it to the communication unit 114. The MPD generation unit 113 applies, when generating this MPD file, the above-mentioned present technology to analyze content of the above-mentioned content and set metadata (stream selection support information) indicating which parameter is to be preferred to MPD.

The communication unit 114 performs processing relating to communication with another apparatus via the network 104. For example, the communication unit 114 supplies the supplied MPD file or MP4 file to the distribution server 102.

As shown in Fig. 14, the MPD generation unit 113 includes a video metadata generation unit 121, an audio metadata generation unit 122, and a file generation unit 123.

The video metadata generation unit 121 performs processing of generating metadata including stream selection support information relating to video. The audio metadata generation unit 122 performs processing of generating metadata including stream selection support information relating to audio. The file generation unit 123 performs processing relating to generation of an MPD file.

### <Flow of Distribution Data Generation Processing>

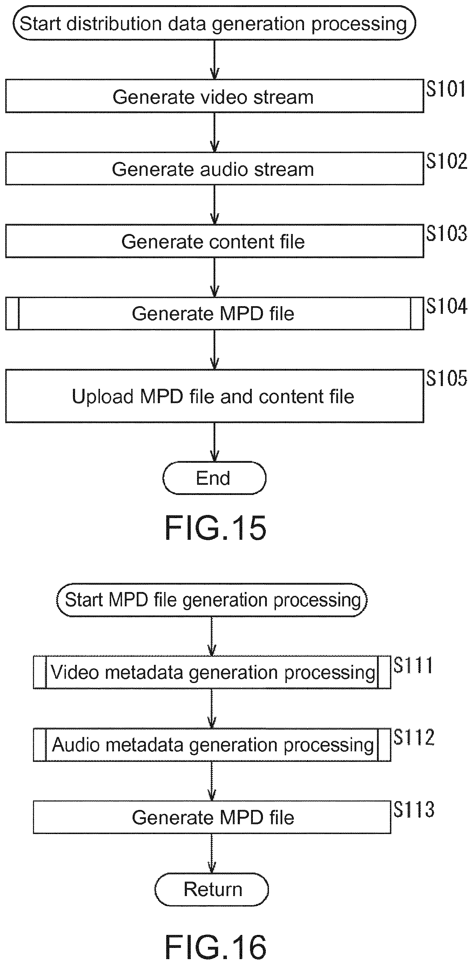

Next, an example of flow of distribution data generation processing executed by the file generation apparatus 101 of the distribution system 100 will be described with reference to the flowchart of Fig. 15. The file generation apparatus 101 performs this distribution data generation processing when generating the MP4 file or MPD file of content data.

When the distribution data generation processing is started, the video stream generation unit 110 of the file generation apparatus 101 generates a video stream from the video analog signal in Step S101.

The audio stream generation unit 111 generates a plurality of types of audio streams from the audio analog signal in Step S102.

In Step S103, the content file generation unit 112 generates a content file (e.g., MP4 file) storing the video stream generated in Step S101 and the audio stream generated in Step S102.

In Step S104, the MPD generation unit 113 executes MPD file generation processing to generate an MPD file for managing the content file (MP4 file) generated in Step S103. Details of this MPD file generation processing will be described below with reference to Fig. 16.

In Step S105, the communication unit 114 supplies (uploads) the content file generated in Step S103 or the MPD file generated in Step S104 to the distribution server 102.

When the processing of Step S105 is finished, the distribution data generation processing is finished.

### <Flow of MPD File Generation Processing>

Next, an example of flow of MPD file generation processing executed in Step S104 in Fig. 15 will be described with reference to the flowchart of Fig. 16.

When the MPD file generation processing is started, the video metadata generation unit 121 of the MPD generation unit 113 acquires, in Step S111, a parameter from the video stream generated in Step S101, analyzes content and scene of the content, and performs, on the basis of the analysis result, processing of generating metadata including stream selection support information relating to video, which indicates which parameter is important.

Subsequently, the audio metadata generation unit 122 acquires, in Step S112, a parameter from the audio stream generated in Step S102, analyzes content and scene of the content, and performs, on the basis of the analysis result, processing of generating metadata including stream selection support information relating to audio, which indicates which parameter is important.

In Step S113, the file generation unit 123 generates an MPD file including metadata generated in Step S111 and Step S112. When the MPD file is generated, the MPD file generation processing is finished, and the processing returns to Fig. 15.

### <Flow of Video Metadata Generation Processing>

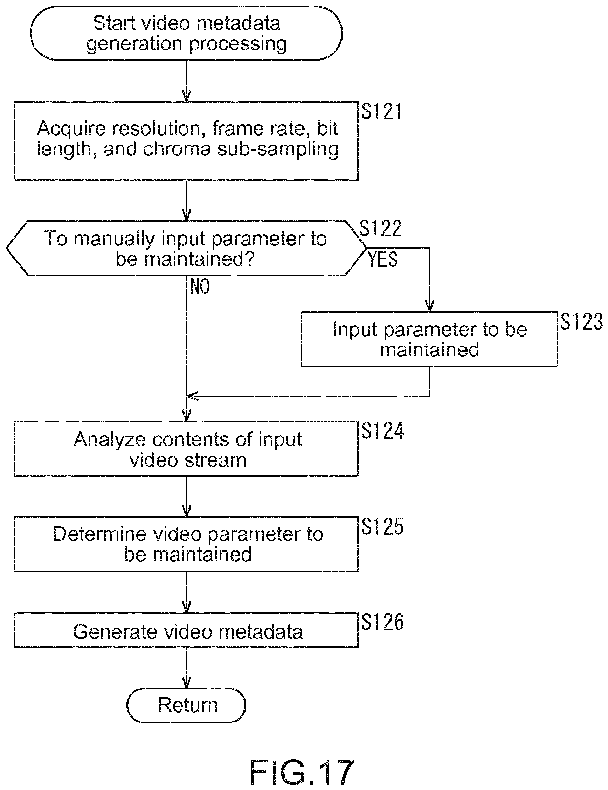

Next, video metadata generation processing of Step S101 in Fig. 16 will be described with reference to the flowchart of Fig. 17.

In Step S121, the video metadata generation unit 121 acquires the resolution, the frame rate, the bit length, and the chroma sub-sampling from the parameter of the input video stream.

In Step S122, the video metadata generation unit 121 determines whether to manually input a parameter to be maintained. In the case where it is determined in Step S122 that a parameter to be maintained is to be manually input, the video metadata generation unit 121 inputs, in Step S123, a parameter to be maintained. In the case where it is determined in Step S122 that a parameter to be maintained is not to be manually input, Step S123 is skipped, and the processing proceeds to Step S124.

The video metadata generation unit 121 analyzes, in Step S124, content of the input video stream, and determines, in Step S125, a video parameter to be maintained, on the basis of the analysis result of Step S124. Note that in the analysis of the content of the video stream, although the priority is determined by using a certain algorithm, the analysis algorithm itself may be any algorithm as long as analysis can be performed.

The video metadata generation unit 121 generates video metadata in Step S126.

### <Flow of Audio Metadata Generation Processing>

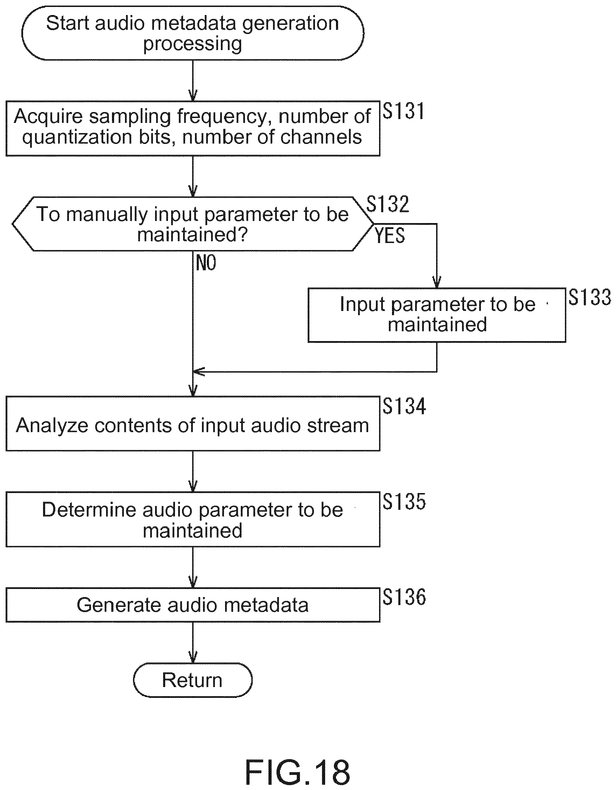

Next, audio metadata generation processing of Step S102 in Fig. 16 will be described with reference to the flowchart of Fig. 18.

In Step S131, the audio metadata generation unit 122 acquires the resolution, the frame rate, the bit length, and the chroma sub-sampling from the parameter of the input audio stream.

In Step S132, the audio metadata generation unit 122 determines whether to manually input a parameter to be maintained. In the case where it is determined in Step S132 that a parameter to be maintained is to be manually input, the audio metadata generation unit 122 inputs, in Step S133, a parameter to be maintained. In the case where it is determined in Step S132 that a parameter to be maintained is not to be manually input, Step S133 is skipped, and the processing proceeds to Step S134.

The audio metadata generation unit 122 analyzes, in Step S134, content of the input audio stream, and determines, in Step S135, an audio parameter to be maintained, on the basis of the analysis result of Step S134. Note that in the analysis of the content of the audio stream, although the priority is determined by using a certain algorithm, the analysis algorithm itself may be any algorithm as long as analysis can be performed.

The audio metadata generation unit 122 generates audio metadata in Step S136.

### <Example of Video Metadata>

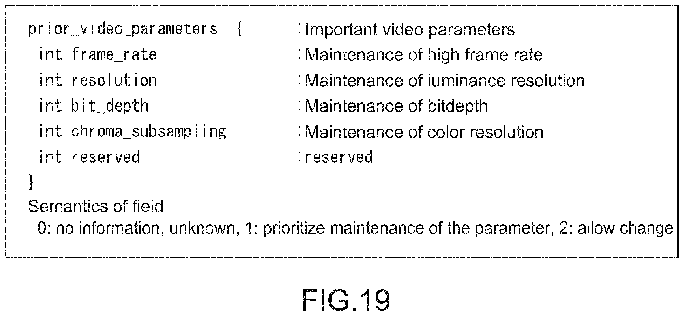

Fig. 19 shows details of metadata (stream selection support information) relating to video. The sender side adds information shown in Fig. 19 to the content for each piece of content (file) or each scene frame of content. Note that each parameter is expressed by three values.

The "prior_video_parameters" indicate important video parameters
The "int frame_rate" indicates maintenance of a high frame rate
The "int resolution" indicates maintenance of a luminance resolution
The "int bit_depth" indicates maintenance of bitdepth
The "int chroma_subsampling" indicated maintenance of a color resolution
The "int reserved" indicates reserved (reserved region)
The semantics of these fields are three values of 0: no information, unknown, 1: prioritize maintenance of the parameter, and 2: allow change.

Note that the metadata is expressed in binary or text (e.g., XML) . The metadata is stored in a single file, MPD, or MP4. In the case of storing it in MPD, it is a property set for Period. Further, in addition to these parameters, for example, a color gamut or a gamma curve may be included.

### <Examples of Audio Metadata>

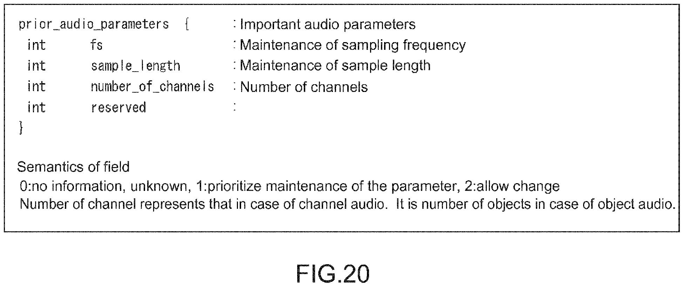

Fig. 20 shows details of metadata (stream selection support information) relating to audio. The sender side adds information shown in Fig. 20 to the content for each piece of content (file) or each scene frame of the content. Note that each parameter is expressed by three values.

The "prior_audio_parameters" indicate important video parameters
The "int fs" indicates maintenance of a sampling frequency
The "int sample_length" indicates maintenance of a sample length
The "int number_of _channels" indicates the number of channels
The "int reserved" indicates reserved (reserved region)

The semantics of these fields are three values of 0: no information, unknown, 1: prioritize maintenance of the parameter, and 2: allow change.

Note that the metadata is expressed in binary or text (e.g., XML). The metadata is stored in a single file, MPD, or MP4. In the case of storing it in MPD, it is a property set for Period.

### <Update Frequency of Metadata>

The entire content, the scene, the DASH segment and the video frame are stored in different places. Although the possible update frequency changes depending on the stored place, the update frequency is not particularly limited. For example, in the case of setting it as Static, it is given as a property for Period of MPD. In setting for all Adaptation Sets and Representations in Period, not only Representation switching in Adaptation Set but also switching between Adaptation Sets is also assumed.

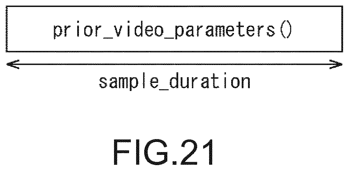

Note that in order to make it possible to change in time series, there is a method of storing it as Timed metadata of MP4. Specifically, as shown in Fig. 21, the duration range is specified by sample duration with one set of parameters as one sample as described in ISO/IEC14496-12 Timed metadata track'meta',C.11 Guidelines on the use of sample groups,timed metadata tracks, and sample auxiliary information.

### <Reproduction Terminal>

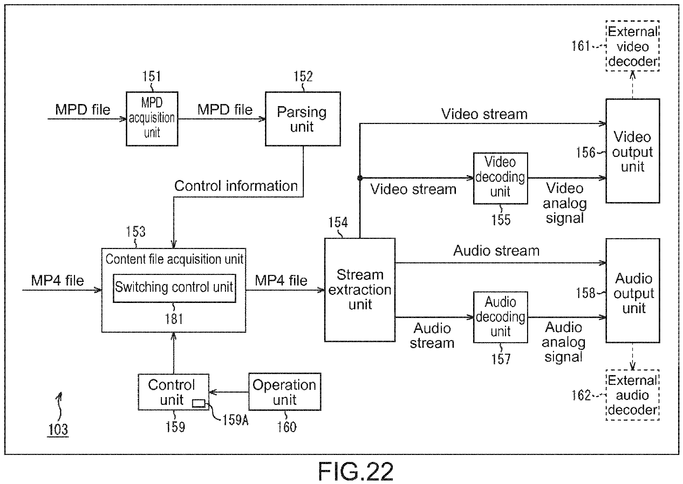

Fig. 22 is a block diagram showing a main configuration example of the reproduction terminal 103. As shown in Fig. 22, the reproduction terminal 103 includes an MPD acquisition unit 151, a parsing unit 152, a content file acquisition unit 153, a stream extraction unit 154, a video decoding unit 155, a video output unit 156, an audio decoding unit 157, an audio output unit 158, a control unit 159, and an operation unit 160.

The MPD acquisition unit 151 performs processing relating to acquisition of an MPD file. For example, the MPD acquisition unit 151 requests the distribution server 102 for an MPD file, and acquires the MPD file supplied from the distribution server 102. The MPD acquisition unit 151 supplies the acquired MPD file to the parsing unit 152.

the parsing unit 152 performs processing relating to parsing (analysis) of an MPD file. For example, the parsing unit 152 parses the MPD file supplied from the MPD acquisition unit 151, generates control information according to the description of the MPD file, and supplies it to the content file acquisition unit 153.

The content file acquisition unit 153 performs processing relating to acquisition of a content file. For example, the content file acquisition unit 153 acquires, on the basis of the control information supplied from the parsing unit 152, an MP4 file as a content file from the distribution server 102, and supplies the acquired MP4 file to the stream extraction unit 154.

The stream extraction unit 154 performs processing relating to extraction of a stream. For example, the stream extraction unit 154 extracts a video stream or an audio stream from the MP4 file supplied from the content file acquisition unit 153. For example, in the case of decoding and outputting the video stream, the stream extraction unit 154 supplies the extracted video stream to the video decoding unit 155. In the case of outputting the video stream without change, the stream extraction unit 154 supplies the extracted video stream to the video output unit 156. For example, in the case of decoding and outputting the audio stream, the stream extraction unit 154 supplies the extracted audio stream to the audio decoding unit 157. In the case of outputting the audio stream without change, the stream extraction unit 154 supplies the extracted audio stream to the audio output unit 158.

The video decoding unit 155 performs processing relating to decoding of the encoded data obtained by encoding the content data. For example, the video decoding unit 155 decodes the video analog signal by, for example, decoding the video stream supplied from the stream extraction unit 154. The video decoding unit 155 supplies the decoded video analog signal to the video output unit 156. Note that the processing on the video stream by the video decoding unit 155 is arbitrary as long as it is performed by a correct method on the stream. For example, not only decoding but also demodulation, D/A conversion, and the like may be performed.

The audio decoding unit 157 performs processing relating to decoding of the encoded data obtained by encoding content data. For example, the audio decoding unit 157 decodes the audio analog signal by, for example, decoding the audio stream supplied from the stream extraction unit 154. The audio decoding unit 157 supplies the decoded audio analog signal to the audio output unit 158. Note that the processing on the audio stream by the audio decoding unit 157 is arbitrary as long as it is performed by a correct method on the stream. For example, not only decoding but also frame rate conversion, resolution conversion, D/A conversion, and the like may be performed.

For example, the audio stream is a DSD lossless stream, and the audio decoding unit 157 decodes the DSD lossless stream to restore DSD data and further demodulates it to restore an audio analog signal. Further, for example, the audio stream may be an LPCM stream or an AAC stream. The audio decoding unit 157 performs processing according to these pieces of data to restore an audio analog signal.

The video output unit 156 performs processing relating to output of content data. For example, the video output unit 156 includes a display, and outputs the video analog signal supplied from the video decoding unit 155 from the display. Further, for example, the video output unit 156 includes an output terminal of a video signal, and supplies the video analog signal supplied from the video decoding unit 155 to another apparatus via the output terminal. Further, for example, the video output unit 156 includes an output terminal of a digital signal, and supplies the audio stream supplied from the stream extraction unit 154 to another apparatus such as an external video decoder 161 via the output terminal. That is, the audio stream may be decoded by the external video decoder 161 provided outside the reproduction terminal 103.

The audio output unit 158 performs processing relating to output of content data. For example, the audio output unit 158 includes a speaker, and outputs the audio analog signal supplied from the audio decoding unit 157 from the speaker. Further, for example, the audio output unit 158 includes an output terminal of an analog signal, and supplies the audio analog signal supplied from the audio decoding unit 157 to another apparatus via the output terminal. Further, for example, the audio output unit 158 includes an output terminal of a digital signal, and supplies the audio stream supplied from the stream extraction unit 154 to another apparatus such as an external audio decoder 162 via the output terminal. That is, the video stream may be decoded by the external audio decoder 162 provided outside the reproduction terminal 103.

Further, as shown in Fig. 22, the content file acquisition unit 153 includes a switching control unit 181. The switching control unit 181 performs processing relating to control of switching of content data to be reproduced. For example, the switching control unit 181 performs this control of switching on the basis of the control information from the parsing unit 152 and user setting information from the control unit 159.

The control unit 159 incorporates a memory 159A that stores necessary information for the reproduction terminal 103 to operate. The control unit 159 causes the user to set a parameter (stream selection preference) for which quality should be focused on at the time of bit rate switching by using the operation unit 160, and holds the setting in the memory 159A as necessary. The control unit 159 supplies the setting information held in the memory 159A in accordance with the switching control unit 181.

The operation unit 160 includes a mouse, a keyboard, a touch panel, or the like. The operation unit 160 inputs setting of parameters by the user, or the like.

### <Flow of Setting Processing>

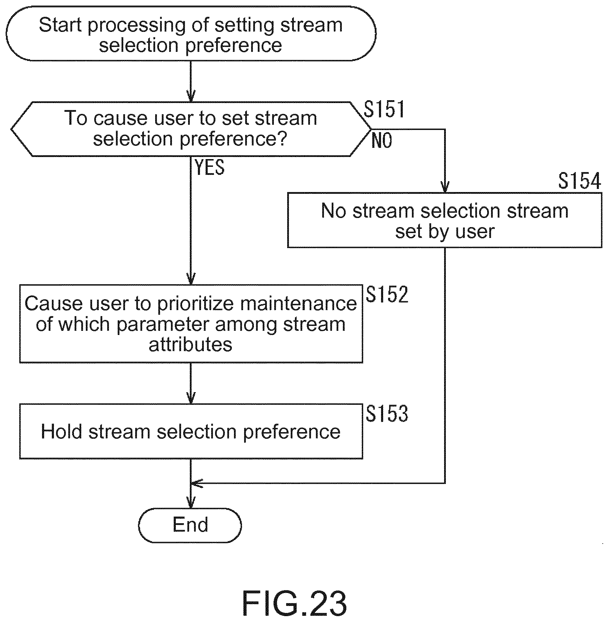

Next, an example of flow of processing of setting a stream selection preference executed by the reproduction terminal 103 of the distribution system 100 will be described with reference to the flowchart of Fig. 23. When the preference setting processing is started, a screen for setting a preference is displayed on a display (not shown). The user who views the screen for setting a preference on the display inputs a stream setting preference by using the operation unit 160.

In Step S151, the control unit 159 determines whether to cause the user to set a stream selection preference, in response to the input from the operation unit 160. In the case where it is determined in Step S151 that the user is caused to set the stream selection preference, the processing proceeds to Step S152.

In Step S152, the control unit 159 causes the user to select which parameter to be maintained is preferred among the stream attributes. That is, a screen for causing the user to select which parameter to be maintained is preferred among the stream attributes is displayed on the display. In response to this, the user inputs a parameter to be preferred by using the operation unit 160.

In Step S153, the control unit 159 holds, in the memory 159A, the stream selection preference indicating that the parameter selected in Step S152 is preferred.

In the case where it is determined in Step S151 that the user is not caused to set the stream selection preference, the processing proceeds to Step S154.

In Step S154, the control unit 159 sets the stream selection preference by the user setting as none. That is, in this case, the switching control unit 181 determines which parameter to be maintained is preferred among the stream attributes, for each piece of content on the basis of the stream selection support information (metadata) from the distribution server 102.

### <Flow of Reproduction Processing>

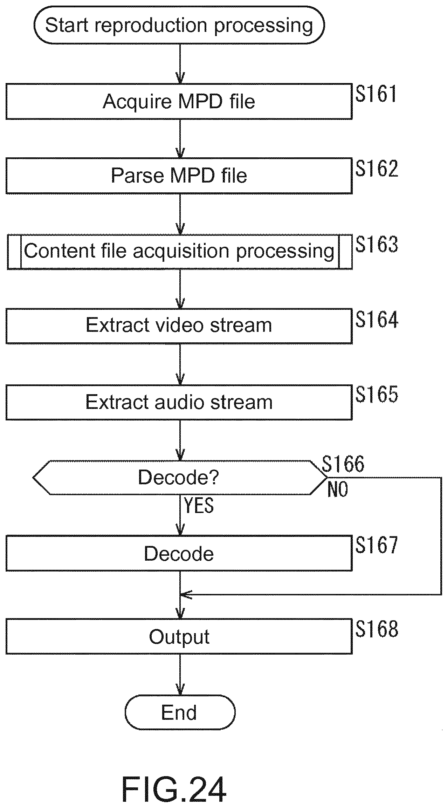

Next, an example of flow of reproduction processing executed by the reproduction terminal 103 will be described with reference to the flowchart of Fig. 24. When the reproduction processing is started, the MPD acquisition unit 151 of the reproduction terminal 103 acquires, in Step S161, the MPD file designated by the user or the like from the distribution server 102, for example.

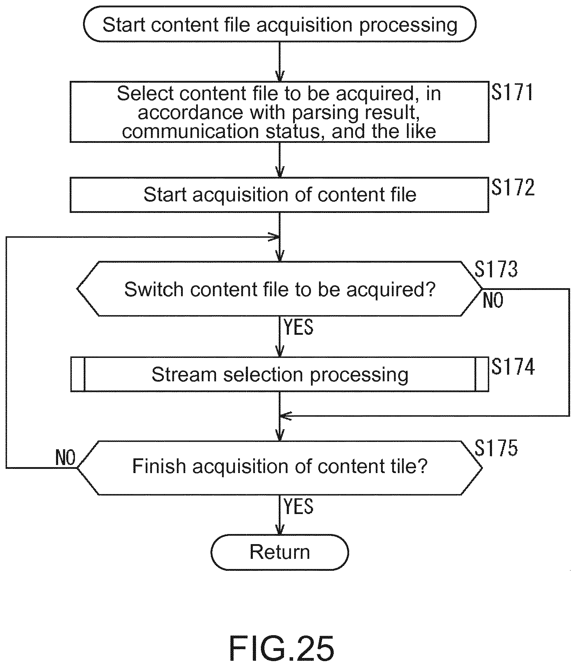

In Step S162, the parsing unit 152 executes parsing processing to parse the MPD file acquired in Step S161, and generates control information reflecting the parsing result. The control information includes stream selection support information (metadata). In Step S163, the content file acquisition unit 153 executes content file acquisition processing to acquire the MP4 file relating to desired content from the distribution server 102 in accordance with the parsing result (control information) of Step S162 and the communication state such as the free bandwidth of the network 104. Note that this content file acquisition processing will be described below with reference to Fig. 25.

In Step S164, the stream extraction unit 154 extracts a video stream from the MP4 file acquired in Step S163. In Step S165, the stream extraction unit 154 extracts an audio stream from the MP4 file acquired in Step S163.

In Step S166, the video decoding unit 155 and the audio decoding unit 157 respectively determine whether to decode the video stream and the audio stream. In the case where it is determined to decode it, the processing proceeds to Step S167. In Step S167, the video decoding unit 155 decodes the video stream extracted in Step S164 to restore a video analog signal, and the audio decoding unit 157 decodes the audio stream extracted in Step S165 to restore an audio analog signal. When the video stream and audio stream are decoded, the processing proceeds to Step S168. Further, in the case where it is determined in Step S166 that the audio stream is not to be decoded, the processing proceeds to Step S168.

In Step S168, the video output unit 156 outputs a video stream or a video analog signal, and the audio output unit 158 outputs an audio stream or an audio analog signal. When the processing of Step S168 is finished, the reproduction processing is finished.

### <Flow of Content File Acquisition Processing>

Next, an example of flow of content file acquisition processing executed in Step S163 in Fig. 24 will be described with reference to the flowchart of Fig. 25. When the content file acquisition processing is started, the content file acquisition unit 153 selects, in Step S171, a content file (MP4 file) to be acquired, in accordance with the parsing result, the communication state, and the like. When the MP4 file to be acquired is determined, the content file acquisition unit 153 starts, in Step S172, acquisition of the MP4 file.

In Step S173, the switching control unit 181 determines whether to switch the MP4 file to be acquired. For example, in the case where it is determined to switch, depending on the fluctuation of the transmission band, the MP4 file to be acquired, or the like, the processing proceeds to Step S174.

In Step S174, the switching control unit 181 performs stream selection processing of selecting and switching a switching destination (i.e., MP4 file after switching) on the basis of the stream selection support information from the distribution server 102 and the stream selection preference setting.

When the processing of Step S174 is finished, the processing proceeds to Step S175. Further, in the case where it is determined in Step S173 that the MP4 file to be acquired is not to be switched, the processing proceeds to Step S175.

In Step S175, the content file acquisition unit 153 determines whether to finish the acquisition of the MP4 file. Further, in the case where the acquisition of the MP4 file of desired content is not finished and it is determined that the acquisition of the MP4 file is not to be finished, the processing returns to Step S174, and the processing of Step S174 and subsequent Steps is repeated. Then, in the case where it is determined in Step S175 that the acquisition of the MP4 file relating to desired content is finished, the content file acquisition processing is finished.

### <Flow of Stream Selection Processing>

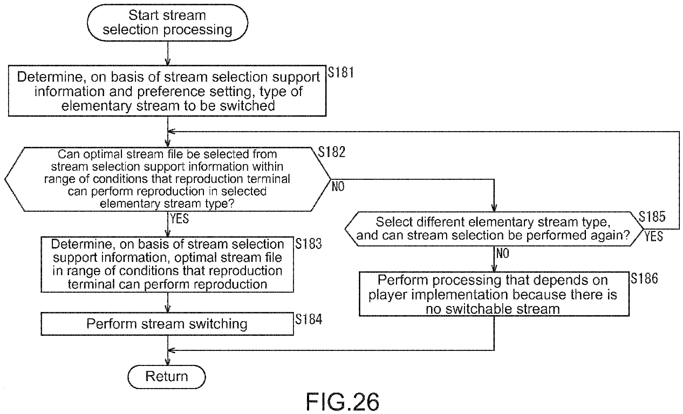

Next, stream selection processing of Step S174 in Fig. 25 will be described with reference to the flowchart of Fig. 26.

In Step S181, the switching control unit 181 determines, on the basis of the stream selection support information and the preference setting in the reproduction terminal 103, the type of an elementary stream to be switched.

In Step S182, the switching control unit 181 determines whether or not the optimal stream file can be selected from the stream selection support information within the range of conditions that the reproduction terminal 103 can perform reproduction in the selected elementary stream type. In the case where it is determined in Step S182 that the optimal stream file can be selected, the processing proceeds to Step S183.

In Step S183, the switching control unit 181 determines, on the basis of the stream selection support information, the optimal stream file in the range of conditions that the reproduction terminal 103 can perform reproduction.

In Step S183, the content file acquisition unit 153 performs stream switching on the stream file determined in Step S182.

In the case where it is determined in Step S182 that the optimal stream file cannot be selected, the processing proceeds to Step S185.

In Step S185, the switching control unit 181 selects a different elementary stream type, and determines whether or not the stream selection can be performed again. In the case where it is determined in Step S185 that the stream selection can be performed again, the processing returns to Step S182, and the processing of Step S182 and subsequent Steps is repeated. In the case where it is determined in Step S185 that the stream selection cannot be performed again, the processing proceeds to Step S186.

In Step S186, the content file acquisition unit 153 performs processing that depends on the reproduction terminal 103 (player) implementation because there is no switchable stream.

After the processing of Step S184 or S186, the processing returns to the processing in Fig. 25.

By executing the processing in this way, the reproduction terminal 103 is capable of acquiring content file in accordance with the stream selection support information and the preference setting in the reproduction terminal 103 to which the present technology is applied. That is, the reproduction terminal 103 is capable of easily realizing seamless switching in accordance with content of the content or the user's preference, and realizing more stable transmission of content data.

As described above, in accordance with the present technology, it is possible to appropriately select a file at the time of bit rate switching in the limited transmission band width.

Note that the selection of an appropriate file means that a stream with less deterioration can be selected in accordance with the characteristics of content or selection that is subjectively less information loss (selection that matches the user's preference) can be made.

### <Metadata Indicating Switching Stream>

Next, in order to reduce the switching time at the time of bit rate switching, a method of preparing a Representation dedicated to bit rate switching instead of normal reproduction (due to lack of image quality or the like for normal reproduction) is considerable.

This Representation for state transition is encoded at lower rate and low delay, and the time required for buffering is short. This effect realizes faster switching. Further, it also can be used for reducing the time to the start of reproduction.

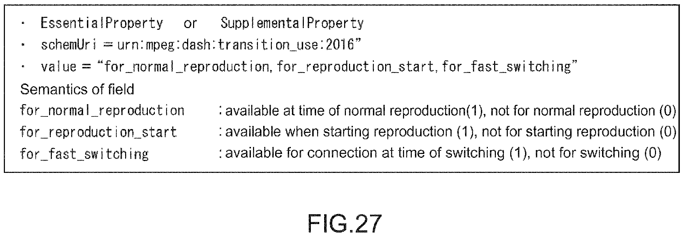

For that reason, for example, an extended property (EssentialProperty or SupplementalProperty) is defined in a Representation of MPD as shown in Fig. 27.
- EssentialProperty or SupplementalProperty
- schemUri ="urn:mpeg:dash:transition_use:2016"
- value ="for_nomal_reproduction, for_reproduction_start, for_fast_switching"

Semantics of the fields are as follows.
for_nomal_reproduction: available at the time of normal reproduction (1), not for normal reproduction (0)
for_reproduction_start: available when starting reproduction (1), not for starting reproduction (0)
for_fast_switching: available as a through point at the time of switching (1), not for switching (0)
Note that in the reproduction terminal 103, this property is also evaluated, and a Representation to be selected is determined.

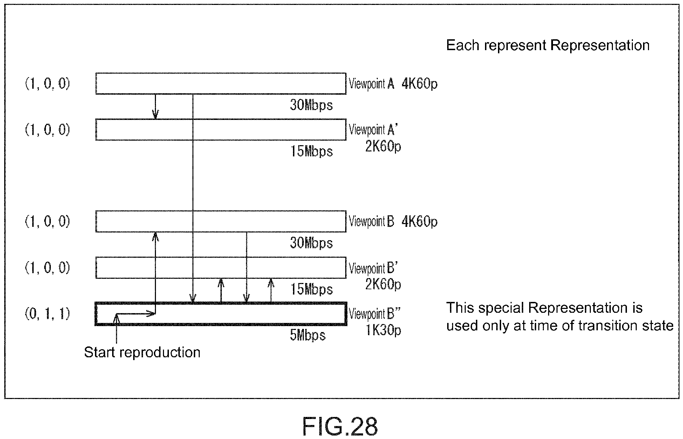

In Fig. 28, five Representations are shown. Note that the above four are (for_nomal_reproduction, for_reproduction_start, for_fast_switching) = (1,0,0), i.e. Representations that are available at the time of normal reproduction. The lower one is (for_nomal_reproduction, for_reproduction_start, for_fast_switching) = (0,1,1), i.e. a Representation that is available when starting reproduction and available as a through point at the time switching.

From top to bottom, a Representation with 4K60p at 30 Mbps from a viewpoint A, a Representation with 2K60p at 15 Mbps from a viewpoint A', a Representation with 4K60p at 30 Mbps from a viewpoint B, a Representation with 2K60p at 15 Mbps from a viewpoint B', and a Representation with 1K30p at 5 Mbps from a viewpoint B" are shown.

For example, as shown in Fig. 28, focusing on the viewpoint A, when switching streams from the Representation with 4K60p at 30 Mbps from the viewpoint A to the Representation with 2K60p at 15 Mbps from a viewpoint B', the Representation with 1K30p at 5 Mbps (low rate) from a viewpoint B" is used once.

Further, the Representation with 1K30p at 5 Mbps (low rate) from a viewpoint B" is reproduced at the time of starting reproduction, and then, the Representation with 4K60p at 30 Mbps from a viewpoint B is reproduced.

Focusing on the viewpoint B, when switching streams from the Representation with 4K60p at 30 Mbps from a viewpoint B to the Representation with 2K60p at 15 Mbps from a viewpoint B', the Representation with 1K30p at 5 Mbps (low rate) from a viewpoint B" is used once.

As described above, by preparing a Representation of a low rate and using it at the time of special reproduction, e.g., when starting reproduction or at the time of switching, it is possible to reduce the switching time.

### <File Generation Apparatus>

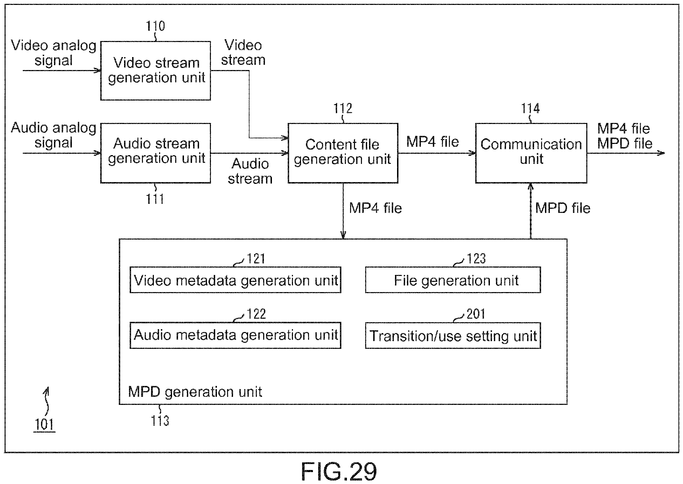

Fig. 29 is a block diagram showing a main configuration example of the file generation apparatus 101. The file generation apparatus 101 in Fig. 29 is the same as the file generation apparatus 101 in Fig. 14 in that it includes the video stream generation unit 110, the audio stream generation unit 111, the content file generation unit 112, the MPD generation unit 113, and the communication unit 114.

The MPD generation unit 113 in Fig. 29 is the same as the MPD generation unit 113 in Fig. 14 in that it includes the video metadata generation unit 121, the audio metadata generation unit 122, and the file generation unit 123.

Meanwhile, the MPD generation unit 113 in Fig. 29 is different from the MPD generation unit 113 in Fig. 14 only in that it includes a transition/use setting unit 201.

Only the different part will be described. The transition/use setting unit 201 sets metadata indicating a switching stream, and performs processing of generating the set metadata.

### <Flow of MPD File Generation Processing>

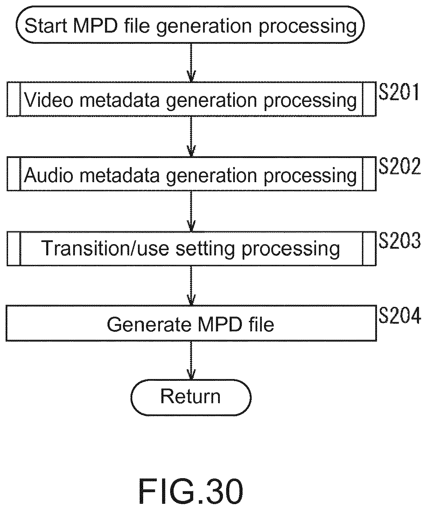

Next, another example of flow of the MPD file generation processing executed by the file generation apparatus 101 in Fig. 29 in Step S104 in Fig. 15 will be described with reference to Fig. 30.

When the MPD file generation processing is started, the video metadata generation unit 121 of the MPD generation unit 113 acquires, in Step S201, a parameter from the video stream generated in Step S101 in Fig. 15, analyzes content (e.g., sportscasts, music live, musicals, or dramas) and scene of the content, and performs, on the basis of the analysis result, processing of generating metadata including stream selection support information relating to video, which indicates which parameter is important.

Next, the audio metadata generation unit 122 acquires, in Step S202, a parameter from the audio stream generated in Step S102, analyzes content and scene of the content, and performs, on the basis of the analysis result, processing of generating metadata including stream selection support information relating to audio, which indicates which parameter is important.

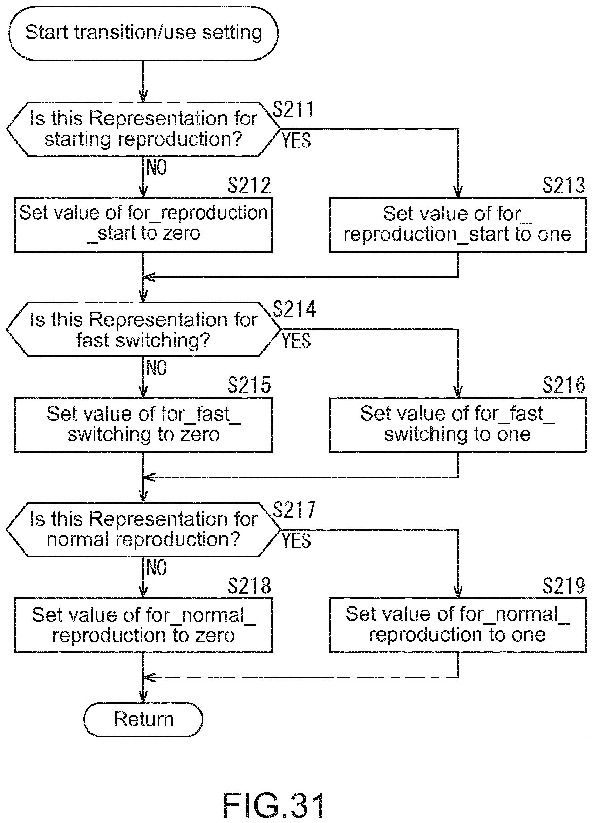

In Step S203, the transition/use setting unit 201 sets metadata indicating a switching stream, and performs processing of generating the set metadata. Details of this transition/use setting processing will be described below with reference to Fig. 31.

In Step S204, the file generation unit 123 generates an MPD file including the pieces of metadata generated in Step S201 to Step S203. When the MPD file is generated, the MPD file generation processing is finished, and the processing returns to Fig. 15.

### <Flow of Transition/Use Setting Processing>

Next, transition/use setting processing of Step S203 in Fig. 30 will be described with reference to the flowchart of Fig. 31.

In Step S211, the transition/use setting unit 201 determines whether or not this Representation is for starting reproduction. In the case where it is determined in Step S211 that this Representation is not for starting reproduction, the processing proceeds to Step S212. In Step S212, the transition/use setting unit 201 sets the value of for_reproduction_start to zero.

In the case where it is determined in Step S211 that this Representation is for starting reproduction, the processing proceeds to Step S213. In Step S213, the transition/use setting unit 201 sets the value of for_reproduction_start to one.

Next, in Step S214, the transition/use setting unit 201 determines whether or not this Representation is for fast switching. In the case where it is determined in Step S214 that this Representation is not for fast switching, the processing proceeds to Step S215. In Step S215, the transition/use setting unit 201 sets the value of for_fast_switching to zero.

In the case where it is determined in Step S214 that this Representation is for fast switching, the processing proceeds to Step S216. In Step S216, the transition/use setting unit 201 sets the value of for_fast_switching to one.

In Step S217, the transition/use setting unit 201 determines whether or not this Representation is for normal reproduction. In the case where it is determined in Step S214 that this Representation is not for normal reproduction, the processing proceeds to Step S218. In Step S218, the transition/use setting unit 201 sets the value of for_nomal_reproduction to zero.

In the case where it is determined in Step S214 that this Representation is not for normal reproduction, the processing proceeds to Step S219. In Step S219, the transition/use setting unit 201 sets the value of for_nomal_reproduction to one.

### <Flow of Stream Selection Processing>

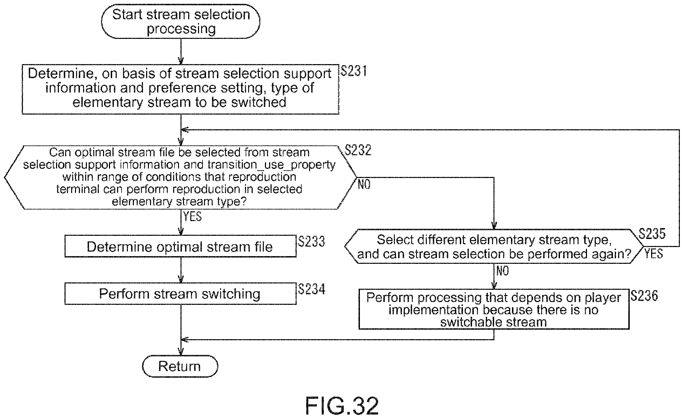

Next, another example of the stream selection processing of Step S174 in Fig. 25 will be described with reference to the flowchart of Fig. 32.

In Step S231, the switching control unit 181 determines, on the basis of the stream selection support information and the preference setting in the reproduction terminal 103, the type of an elementary stream to be switched.

In Step S232, the switching control unit 181 determines whether or not the optimal stream file can be selected from the stream selection support information and transition_use_property within the range of conditions that the reproduction terminal 103 can perform reproduction in the selected elementary stream type. In the case where it is determined in Step S232 that the optimal stream file can be selected, the processing proceeds to Step S233.

In Step S233, the switching control unit 181 determines, on the basis of the stream selection support information, the optimal stream file in the range of conditions that the reproduction terminal 103 can perform reproduction.

In Step S233, the content file acquisition unit 153 executes stream switching on the stream file determined in Step S232.

In the case where it is determined in Step S232 that the optimal stream file cannot be selected, the processing proceeds to Step S235.

In Step S235, the switching control unit 181 selects a different elementary stream type, and determines whether or not the stream selection can be performed again. In the case where it is determined in Step S235 that the stream selection can be performed again, the processing returns to Step S232, and the processing of Step S232 and subsequent Steps is repeated. In the case where it is determined in Step S232 that the stream selection cannot be performed again, the processing proceeds to Step S236.

In Step S236, the content file acquisition unit 153 performs processing that depends on the reproduction terminal 103 (player) implementation because there is no switchable stream.

After the processing of Step S234 or S236, the processing returns to the processing in Fig. 25.

By executing the processing in this way, the reproduction terminal 103 is capable of acquiring content file in accordance with the stream selection support information, transition_use_property, and the preference setting in the reproduction terminal 103 to which the present technology is applied. That is, the reproduction terminal 103 is capable of easily realizing seamless switching in accordance with content of the content or the user's preference, and realizing more stable transmission of content data.

As described above, in accordance with the present technology, it is possible to select the optimal stream with a parameter other than the bit rate. Further, it is possible to perform fast seamless switching that does not depend on the unique implementation of a reproduction apparatus.

### <3. Second Embodiment (computer)>

### <Computer>

The above series of processing can be performed not only by hardware but also by software. When the series of processing is performed by software, a program constituting the software is installed in a computer. Here, examples of the computer include a computer incorporated in dedicated hardware and a general-purpose personal computer capable of performing various functions with the installation of various programs.

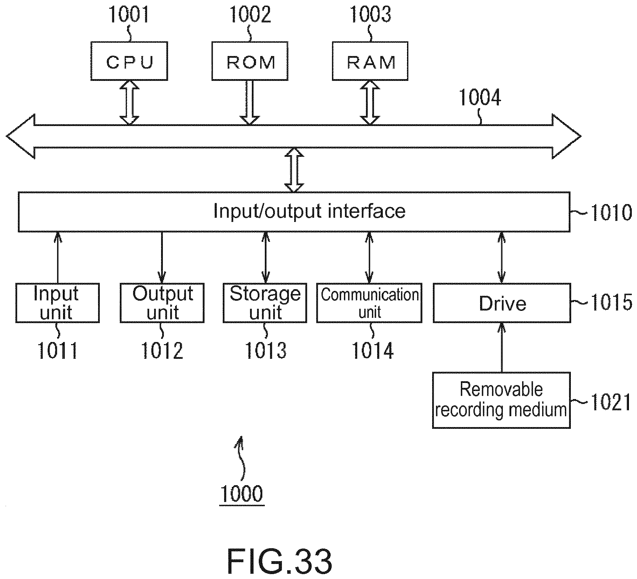

Fig. 33 is a block diagram showing a configuration example of the hardware of a computer that performs the above series of processing according to a program.

In a computer 1000 shown in Fig. 33, a CPU (Central Processing Unit) 1001, a ROM (Read Only Memory) 1002, and a RAM (Random Access Memory) 1003 are connected to one another via a bus 1004.

In addition, an input/output interface 1010 is connected to the bus 1004. An input unit 1011, an output unit 1012, a storage unit 1013, a communication unit 1014, and a drive 1015 are connected to the input/output interface 1010.

The input unit 1011 is composed of, for example, a keyboard, a mouse, a microphone, a touch panel, or an input terminal. The output unit 1012 is composed of, for example, a display, a speaker, or an output terminal. The storage unit 1013 is composed of, for example, a hard disk, a RAM disk, or a non-volatile memory. The communication unit 1014 is composed of, for example, a network interface. The drive 1015 drives a removable medium 1021 such as a magnetic disk, an optical disk, a magnetic optical disk, and a semiconductor memory.

In the computer configured as described above, the CPU 1001 loads, for example, a program stored in the storage unit 1013 into the RAM 1003 via the input/output interface 1010 and the bus 1004 to be performed to perform the above series of processing. In the RAM 1003, also data necessary for the CPU 1001 to perform various types of processing, and the like are appropriately stored.

The program performed by the computer (the CPU 1001) can be recorded on, for example, the removable medium 1021 serving as a package medium or the like to be provided. In this case, the program can be installed in the storage unit 1013 via the input/output interface 1010 by the attachment of the removable medium 1021 to the dr9ive 1015.

Further, the program can be provided via a wired or wireless transmission medium such as a local area network, the Internet, and digital satellite broadcasting. In this case, the program can be received by the communication unit 1014 and installed in the storage unit 1013.

Besides, the program can be installed in advance in the ROM 1002 or the storage unit 1013.

### <Others>

Note that various pieces of information relating to the encoded data (bit stream) may be multiplexed into the encoded data and transmitted or recorded, or may be transmitted or recorded as separate data associated with the encoded data without being multiplexed into the encoded data. Here, the term "associate" means that, for example, one piece of data can be used (linked) when processing the other piece of data. That is, the pieces of data associated with each other may be collected as one piece of data, or may be individual data. For example, information associated with the encoded data (image) may be transmitted on a transmission path different from that for the encoded data (image). Further, for example, the information associated with the encoded data (image) may be recorded in a recording medium different from that for the encoded data (image) (or another recording area of the same recording medium). Note that this "association" may be performed not for the entire data but a part of the data. For example, an image and information corresponding to the image may be associated with each other in arbitrary units such as a plurality of frames, one frame, or a part in a frame.

Further, as described above, in the present specification, terms such as "synthesize", "multiplex", "add", unify", "include", "store", "place", "put", and "insert" means, for example, collecting a plurality of things into one, e.g., collecting the encoded data and the metadata into one piece of data, and means one method of the above-mentioned "associate".

Further, embodiments of the present technology are not limited the above-mentioned embodiments, and various modifications can be made without departing from the essence of the present technology.

For example, in the present specification, a system represents the aggregate of a plurality of components (such as apparatuses and modules (parts)) and may have all the components in the same housing according to situations. Therefore, the system includes both a plurality of apparatuses accommodated in separate housings and connected to each other via a network and an apparatus having a plurality of modules in a housing.

Further, for example, the configuration described as one apparatus (or processing unit) may be divided and configured as a plurality of apparatuses (or processing units). Conversely, the configuration described as a plurality of apparatuses (or processing units) in the above may be collectively configured as one apparatus (or processing unit). Further, it goes without saying that a configuration other than those described above may be added to the configuration of each apparatus (or each processing unit). Further, a part of a configuration of a certain apparatus (or processing unit) may be included in a configuration of another apparatus (or processing unit) as long as the configuration or operation as the entire system is substantially the same.

Further, for example, the present technology can employ the configuration of cloud computing in which one function is shared and cooperatively processed between a plurality of apparatuses via a network.

Further, for example, the above-mentioned program can be executed in an arbitrary apparatus. In this case, the apparatus only needs to have a necessary function (functional blocks, or the like) and acquire necessary information.

Further, for example, each Step described in the above-mentioned flowchart can be executed in one apparatus as well as can be executed by a plurality of apparatuses in a shared manner. Further, in the case where one Step includes a plurality of processes, the plurality of processes included in one Step can be executed in one apparatus as well as can be executed by a plurality of apparatuses in a shared manner.

Note that the processing of Steps describing the program executed by the computer may be executed chronologically in the order described in the present specification, or may be executed individually in parallel or at a necessary timing, e.g., when being called. Further, this processing of Steps describing the program may be executed in parallel with the processing of another program, or executed in combination with the processing of another program.

Note that the present technologies described in the present specification can be independently implemented alone as long as there is no contradiction. It goes without saying that a plurality of arbitrary present technologies may be implemented in combination. For example, the present technology described in any of the embodiment can be implemented in combination with the present technology described in another embodiment. Further, any of the above-mentioned present technologies can be implemented in combination with another technology that is not described above.

It should be noted that the present technology may take the following configurations.
(1) An information processing apparatus, including:
   a metadata generation unit that generates metadata indicating information regarding a parameter to be preferentially maintained, the parameter being determined in accordance with content of content data; and
   a transmission unit that transmits the metadata generated by the metadata generation unit and pieces of content data of a plurality of bit rates.
(2) The information processing apparatus according to (1) above, in which
   the parameter includes a parameter relating to video data.
(3) The information processing apparatus according to (1) or (2) above, in which
   the parameter includes a resolution, a frame rate, a sample bit length, and a chroma sub-sampling.
(4) The information processing apparatus according to (1) or (2) above, in which
   the parameter includes a gamma curve or a color gamut.
(5) The information processing apparatus according to any one of (1) to (4) above, in which
   the parameter includes a parameter relating to audio data.
(6) The information processing apparatus according to any one of (1) to (5) above, in which
   the parameter includes a sampling frequency, the number of quantization bits, and the number of channels.
(7) The information processing apparatus according to any one of (1) to (6) above, in which
   the metadata is one piece of metadata fixed for content data or changes depending on reproduction time.
(8) The information processing apparatus according to any one of (1) to (7) above, in which
   the transmission unit transmits metadata included in an MPD file or an MP4 file.
(9) The information processing apparatus according to any one of (1) to (8) above, in which
   the pieces of content data of the plurality of bit rates include content data of a low bit rate available as a through point at a time of switching, and
   the metadata generation unit generates metadata indicating that content data is the content data of the low bit rate.
(10) An information processing method, including:
   by an information processing apparatus,
   generating metadata indicating information regarding a parameter to be preferentially maintained, the parameter being determined in accordance with content of content data; and
   transmitting the generated metadata and pieces of content data of a plurality of bit rates.
(11) An information processing apparatus, including:
   a parameter setting unit that sets a parameter to be preferred, the parameter being used when switching a bit rate of content data to be received; and
   a bit rate switching unit that determines, on the basis of the parameter set by the parameter setting unit, a bit rate of the switched content data from pieces of content data of a plurality of bit rates.
(12) The information processing apparatus according to (11) above, in which
   the parameter is a parameter relating to video data.
(13) The information processing apparatus according to (11) or (12) above, in which
   the parameter includes a resolution, a frame rate, a sample bit length, and a chroma sub-sampling.
(14) The information processing apparatus according to any one of (11) to (13) above, in which
   the parameter includes a gamma curve or a color gamut.
(15) The information processing apparatus according to any one of (11) to (14) above, in which
   the parameter includes a parameter relating to audio data.
(16) The information processing apparatus according to any one of (11) to (15) above, in which
   the parameter includes a sampling frequency, the number of quantization bits, and the number of channels.
(17) The information processing apparatus according to any one of (11) to (16) above, further including
   a metadata reception unit that receives metadata indicating information regarding a parameter to be preferentially maintained, the parameter being determined in accordance with content of content data, in which
   the bit rate switching unit determines, on the basis of the metadata received by the metadata reception unit and the parameter set by the parameter setting unit, a bit rate of the switched content data.
(18) The information processing apparatus according to (17) above, in which
   the metadata is one piece of metadata fixed for content data or changes depending on reproduction time.
(19) The information processing apparatus according to (17) or (18), in which
   the metadata is included in an MPD file or an MP4 file and transmitted.
(20) An information processing method, including:
   by an information processing apparatus,
   setting a parameter to be preferred, the parameter being used when switching a bit rate of content data to be received; and
   determining, on the basis of the set parameter, a bit rate of content data to be switched from pieces of content data of a plurality of bit rates.

### Reference Signs List

- 100: distribution system
- 101: file generation apparatus
- 102: distribution server
- 103: reproduction terminal
- 104: network
- 110: video stream generation unit
- 111: audio stream generation unit
- 112: content file generation unit
- 113: an MPD generation unit
- 114: communication unit
- 121: video metadata generation unit
- 122: audio metadata generation unit
- 123: file generation unit
- 151: MPD acquisition unit
- 152: parsing unit
- 153: content file acquisition unit
- 154: stream extraction unit
- 155: video decoding unit
- 156: video output unit
- 157: audio decoding unit
- 158: audio output unit
- 159: control unit
- 160: operation unit
- 181: switching control unit
- 201: transition/use setting unit

## Claims

1. An information processing apparatus, comprising:
a metadata generation unit that generates metadata indicating information regarding a parameter to be preferentially maintained, the parameter being determined in accordance with content of content data; and
a transmission unit that transmits the metadata generated by the metadata generation unit and pieces of content data of a plurality of bit rates.

2. The information processing apparatus according to claim 1, wherein
the parameter includes a parameter relating to video data.

3. The information processing apparatus according to claim 2, wherein
the parameter includes a resolution, a frame rate, a sample bit length, and a chroma sub-sampling.

4. The information processing apparatus according to claim 2, wherein
the parameter includes a gamma curve or a color gamut.

5. The information processing apparatus according to claim 1, wherein
the parameter includes a parameter relating to audio data.

6. The information processing apparatus according to claim 5, wherein
the parameter includes a sampling frequency, the number of quantization bits, and the number of channels.

7. The information processing apparatus according to claim 1, wherein
the metadata is one piece of metadata fixed for content data or changes depending on reproduction time.

8. The information processing apparatus according to claim 1, wherein
the transmission unit transmits metadata included in an MPD file or an MP4 file.

9. The information processing apparatus according to claim 1, wherein
the pieces of content data of the plurality of bit rates include content data of a low bit rate available as a through point at a time of switching, and
the metadata generation unit generates metadata indicating that content data is the content data of the low bit rate.

10. An information processing method, comprising:
by an information processing apparatus,
generating metadata indicating information regarding a parameter to be preferentially maintained, the parameter being determined in accordance with content of content data; and
transmitting the generated metadata and pieces of content data of a plurality of bit rates.

11. An information processing apparatus, comprising:
a parameter setting unit that sets a parameter to be preferred, the parameter being used when switching a bit rate of content data to be received; and
a bit rate switching unit that determines, on a basis of the parameter set by the parameter setting unit, a bit rate of the switched content data from pieces of content data of a plurality of bit rates.

12. The information processing apparatus according to claim 11, wherein
the parameter is a parameter relating to video data.

13. The information processing apparatus according to claim 12, wherein
the parameter includes a resolution, a frame rate, a sample bit length, and a chroma sub-sampling.

14. The information processing apparatus according to claim 12, wherein
the parameter includes a gamma curve or a color gamut.

15. The information processing apparatus according to claim 11, wherein
the parameter includes a parameter relating to audio data.

16. The information processing apparatus according to claim 15, wherein
the parameter includes a sampling frequency, the number of quantization bits, and the number of channels.

17. The information processing apparatus according to claim 11, further comprising
a metadata reception unit that receives metadata indicating information regarding a parameter to be preferentially maintained, the parameter being determined in accordance with content of content data, wherein
the bit rate switching unit determines, on a basis of the metadata received by the metadata reception unit and the parameter set by the parameter setting unit, a bit rate of the switched content data.

18. The information processing apparatus according to claim 17, wherein
the metadata is one piece of metadata fixed for content data or changes depending on reproduction time.

19. The information processing apparatus according to claim 11, wherein
the metadata is included in an MPD file or an MP4 file and transmitted.

20. An information processing method, comprising:
by an information processing apparatus,
setting a parameter to be preferred, the parameter being used when switching a bit rate of content data to be received; and
determining, on a basis of the set parameter, a bit rate of content data to be switched from pieces of content data of a plurality of bit rates.
